# EUROPÄISCHE PATENTSCHRIFT

(11) **EP 3 924 650 B1**
(45) Veröffentlichungstag und Bekanntmachung des Hinweises auf die Patenterteilung: **30.08.2023**
(21) Anmeldenummer: 20705339.8
(22) Anmeldetag: 12.02.2020
(51) Int. Cl.: F16K 3/316

(54) **TORVENTIL MIT KULISSENFÜHRUNG**
GATE VALVE WITH SLIDING GUIDE
VANNE D'ARRÊT AVEC GUIDE À COULISSE

(30) Priorität: 15.02.2019 DE 102019001115
(43) Veröffentlichungstag der Anmeldung: 22.12.2021
(73) Patentinhaber: VAT Holding AG, 9469 Haag (CH)
(72) Erfinder: NETZER, Martin, 6700 Bludenz (AT)
(74) Vertreter: Kaminski Harmann
(86) Internationale Anmeldenummer: PCT/EP2020/053596
(87) Internationale Veröffentlichungsnummer: WO 2020/165248

(56) Entgegenhaltungen:
- EP-A1- 3 239 567
- US-A- 2 895 709
- US-A- 4 634 094
- US-A1- 2005 139 799
- US-A1- 2017 356 569

## Beschreibung

Die Erfindung betrifft ein Vakuumventil zum im Wesentlichen gasdichten Verschliessen einer Öffnung oder eines Volumens nach Anspruch 1. Allgemein sind Vakuumventile zum im Wesentlichen gasdichten Schliessen eines Fliesswegs, Strömungswegs oder Strahlengangs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC- und Halbleiterfertigung aber beispielsweise auch im Bereich der Elektronenmikroskopie, die ebenfalls in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Ausserdem werden Vakuumventile auch im Bereich der Batterieherstellung eingesetzt, wobei auch hier eine atmosphärische Trennung eines Prozessbereichs von einer Umgebungsatmosphäre bereitgestellt wird. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Aus dem Stand der Technik sind ferner diverse Ausführungsformen von Vakuumventilen, insbesondere deren Dichtungs- und Antriebstechnologie, bekannt. Abhängig von der jeweiligen Antriebstechnologie wird insbesondere zwischen Vakuumschieberventilen oder Schieberventilen, auch Ventilschieber oder Rechteckschieber genannt, und Pendelventilen unterschieden, wobei das Schliessen und Öffnen im Stand der Technik meist in zwei Schritten erfolgt.

In einem ersten Schritt wird ein Ventilverschluss, insbesondere ein Verschlussteller, im Falle eines Schieberventils, wie beispielsweise aus der US 6,416,037 (Geiser) oder der US 6,056,266 (Blecha) bekannt, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem weiteren Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über einen auf der Verschlussseite des Verschlusstellers angeordneten Dichtungsring, der auf den die Öffnung umlaufenden Ventilsitz gepresst wird, erfolgen, oder über einen Dichtungsring auf dem Ventilsitz, gegen den die Verschlussseite des Verschlusstellers gedrückt wird.

Aus der US 5,769,952 (Komino) ist ein als Vakuum-Transferventil ausgebildetes Schieberventil bekannt, das sich im Wesentlichen aus einem Linearverstellantrieb, einer entlang ihrer Schubstangenachse linear verschiebbaren Schubstange und einem Verschlussteller zusammensetzt. Der Verschlussteller ist über zwei Schenkel mit der Schubstange verbunden. Durch Verstellen der Schubstange linear entlang der Schubstangenachse in Schliessrichtung kann der Verschlussteller parallel über die Ventilöffnung verschoben werden, wobei sich der Verschlussteller in beanstandeter Gegenüberlage zum Ventilsitz, welcher die Öffnung umgibt, befindet. Die beiden Schenkel sind jeweils an dem einen Schenkelende an einer sich quer zur Schubstange ersteckenden und parallel zur Ventilsitzebene verlaufenden Querstange und jeweils an dem anderen Schenkelende an dem Verschlussteller schwenkbar mittels Schwenklager gelagert. Beide Schenkel sind in Richtung der Querstange parallel zueinander angeordnet und haben seitens des Verschlusstellers und seitens der Querstange jeweils eine gemeinsame geometrische Schwenkachse. Die Schenkel halten den Verschlussteller derart, dass sich die querstangenseitige geometrische Schwenkachse in Bezug auf die Schliessrichtung der lineare Verstellrichtung der Schubstange unterhalb der verschlussteilseitigen Schwenkachse befindet, so dass eine entgegen der Schliessrichtung der Schubstange wirkende Kraft auf den Verschlussteller zu einer Verringerung des Abstandes der beiden Schwenkachsen in Bezug auf die Schliessrichtung führt. Am Ende des linearen Verstellwegs des Verschlusstellers ist eine Führungsrolle angeordnet. Kommt es zu einem Kontakt zwischen dem Verschlussteller und der Führungsrolle, kann der Verschlussteller nicht mehr weiter in Schliessrichtung verstellt werden. Der Linearverstellantrieb übt jedoch weiterhin eine Kraft auf den Verschlussteller aus, so dass die Schenkel ausschwenken, sich somit der senkrechten Stellung zur linearen Verstellrichtung nähern und als Hebel wirken kann. Der Verschlussteller wird hierdurch in Richtung zum Ventilsitz verstellt und auf diesen gedrückt.

Ein Vorteil eines derartigen Schieberventils mit einem Schenkelmechanismus ist der relativ einfach aufgebaute Antrieb, da die Schubstange nur linear verschoben werden muss. Ein Problem stellen jedoch die senkrecht auf die Schubstangenachse wirkenden Kräfte dar, die von der Schubstangenlagerung aufgenommen werden müssen. Da sich der Verschlussteller auf der Führungsrolle abstützen und hierbei grosse Kräfte aufnehmen muss, ist eine gross dimensionierte Ausgestaltung des Verschlusstellers erforderlich. Aufgrund der Anordnung der Schwenkachsen ist die parallele Ausrichtung des Verschlusstellers zum Ventilsitz nicht gewährleistet, weshalb der Verschlussteller beim Kontaktieren des Ventilsitzes zunächst schräg aufsitzt, Scherkräfte auf die Dichtung unvermeidbar sind und keine gleichmässig verteilte Anpresskraft gewährleistet ist. Durch Verwendung der Führungsrolle und der Schwenklager kann die Generierung von Partikeln insbesondere aufgrund von Reibung nicht verhindert werden, weshalb die Partikelfreiheit nicht gewährleistet ist.

In der US 7,980,529 wird ein Vakuumschieberventil gezeigt, bei welchem an einer linear verstellbaren Schubstange mittels zweier parallelogrammartig schwenkbarer und in Verstellrichtung der Schubstange parallel beabstandeter Schenkel ein Verschlussteil gelagert ist. Aufgrund der parallelogrammartigen Lagerung über die Schenkel ist das Verschlussteil stets parallel zur Schubstange und zum Ventilsitz ausgerichtet. In einem in Schliessrichtung der linear verstellbaren Schubstange ausgeschwenkten Zustand des Verschlussteils wird das Versschlussteil durch lineares Verstellen der Schubstange parallel über die Öffnung des Ventils soweit geschoben, bis das Verschlussteil einen oberhalb der Öffnung angebrachten Stopper berührt. Der Stopper hindert das Verschlussteil an einer weiteren Bewegung in Schliessrichtung. Da die Schubstange jedoch weiterhin in Schliessrichtung verstellt wird, schwenken die Schenkel in Richtung zum Ventilsitz aus, so dass das Verschlussteil auf den Ventilsitz gedrückt und die Öffnung somit verschlossen wird.

Auch in der US 4,491,145 (Williams et al.), der US 5,415,375 (Gaboriault), der US 2,841,361 (Palmer) und der GB 257,254 werden Schieberventile mit derartigen parallelogrammgeführten, mechanisch gelagerten Schenkeln zum Andrücken eines Ventilverschlusses auf einen Ventilsitz durch Ausschwenken der Schenkel gezeigt. Gemein ist diesen Ausführungen, dass ihr Betrieb aufgrund der zahlreichen Reibstellen, insbesondere der Lagerungen der Schenkel, mit einer verhältnismässig grossen Partikelerzeugung verbunden ist und ein Einsatz im Hochrein-Vakuumbereich, in welchem die freien Partikel auf ein Mindestmass zu halten sind, weitgehend ausgeschlossen ist.

Die US 2017/0356569 A1 schlägt ferner ein Vakuumventil mit einem kippbaren Ventilteller zur Druckregelung vor. Die EP 3 239 567 A1 offenbart ein Torventil mit einem zweiteiligen Ventilverschluss und Verschlussmechanismus. Die US 2005/0139799 A1 zeigt einen zweiseitigen Ventilverschluss. Die US 4634,094 schlägt ein Ventil mit einem drehbar gelagertem Ventilverschluss vor. Die US 2,895,709 zeigt ein Ventil mit einem zweitilgen Ventilverschluss zum Verschliessen zweier Ventilöffnungen.

Für Vakuum- oder Hochvakuumanwendungen, bei welchen verhältnismäßig große Werkstücke zu bearbeiten sind, kann das Verschlusselement entsprechend sehr viel größer ausfallen als z.B. für das Verschliessen einer Vakuumkammer eines Elektronenmikroskops nötig. Der Verschluss muss hierzu oft derart gestaltet sein, dass auch grosse Teile in die Vakuumkammer eingebracht werden können. Insbesondere kann das Verschlusselement hierzu in Form einer Türe oder eines Tors ausgestaltet sein. Hierbei verursacht somit auch schon allein das Eigengewicht des Verschlusses eine zusätzliche Beanspruchung des Ventils.

Je grösser dimensioniert das Verschlusselement ist, desto grösser sind die Kräfte, die bei einer Schliess- oder Öffnungsbewegung des Verschlusses wirken. Bei einem vertikal schliessenden und öffnenden Ventiltor beispielsweise muss bei einem Schliessen des Ventils die kinetische Bewegungsenergie des Tors in potentielle Lageenergie überführt werden. Dabei ist von Interesse, dass das Schliessen mit möglichst kurzem Zeitbedarf geschieht, die Bewegung des Tors also vergleichsweise schnell erfolgt. Auch diese gewünschte Schnelligkeit bei der Bearbeitung von Werkstücken trägt zur Grösse der dabei entstehenden kinetischen Energie des Tors bei. Kritisch ist hier folglich der Verschleiss der einzelnen Ventilteile aufgrund der gewünscht schnellen Bewegung - Beschleunigen und Abbremsen - von verhältnismässig grossen Massen. Dabei treten insbesondere Abnutzungen an solchen Ventilteilen auf, die für das Abbremsen oder Bewegungsbegrenzen des Verschlusses vorgesehen sind.

Gleichzeitig ergeben sich aufgrund der schnellen Bewegung und Grösse oftmals Schwierigkeiten in Bezug auf die sichere Gewährleistung eines gasdichten Verschlusses einer Kammer.

Es ist daher Aufgabe der vorliegenden Erfindung ein Vakuumventil im Besonderen für die Bearbeitung von verhältnismässig grossen Werkstücken, insbesondere ein Tür- oder Torventil, bereitzustellen, welches eine Verbesserung hinsichtlich dessen Verschleisseigenschaften aufweist.

Eine Aufgabe der Erfindung ist es insbesondere ein Torventil bereitzustellen, welches ein verlässliches Verschliessen einer Öffnung bei reduzierter oder ausgeschlossener Partikelbildung anbietet.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Vakuumventil, insbesondere Vakuumschieberventil, insbesondere Torventil, zum im Wesentlichen gasdichten Verschliessen einer eine Öffnungsachse definierende Öffnung. Das Ventil verfügt über ein Verschlusselement mit einer Verschlussseite und einer Kopplungseinheit, insbesondere Hebelmechanismus, die an einer der Verschlussseite gegenüberliegenden Rückseite angeordnet ist. Das Ventil weist eine die Öffnung umlaufende Ventilwand mit Ventilsitz sowie eine Linearantriebseinheit auf, mittels welcher das Verschlusselement in zumindest zwei Verstellrichtungen im Wesentlichen orthogonal zu der Öffnungsachse entlang einer Verstellachse verstellbar ist und somit das Verschlusselement zwischen einer die Öffnung freigebenden Offenposition, einer über die Öffnung geschobenen Zwischenposition, in welcher sich das Verschlusselement zumindest teilweise in einer im Wesentlichen parallel beabstandeten Gegenüberlage zum Ventilsitz befindet, und einer die Öffnung verschliessenden Geschlossenposition, wobei das Verschlusselement mit dessen Verschlussseite auf den Ventilsitz gedrückt ist und die Öffnung verschliesst, insbesondere gasdicht verschliesst, verstellbar ist.

Die Linearantriebseinheit kann beispielsweise als ein Antriebszylinder ausgestaltet sein, welcher insbesondere über einen internen Dämpfungsmechanismus und/oder über eine entsprechende Dämpfungssteuerung verfügt, um bei einem Schliessen des Verschlusses (Ventilteller oder -tor) die Bewegung des Verschlusses vorab abzubremsen bzw. eine vorgedämpfte Schliessbewegung zu erreichen.

Das Vakuumventil weist zudem eine der Öffnung bzw. der Ventilwand zugeordnete Führung für das Verschlusselement auf. Die Führung ist insbesondere fix relativ zum Ventilgehäuse angeordnet. Das Verschlusselement ist beweglich relativ zu der Führung angeordnet und ausgeführt. Das Verschlusselement weist ferner ein mit der Führung während einer Verstellung aus der Offenposition in die Geschlossenposition oder die Zwischenposition, und zurück, zusammenwirkendes Führungselement auf. Das Führungselement ist entsprechend beweglich relativ zu der Führung.

Die Führung und das Führungselement sind derart ausgeformt und wirken derart zusammen, dass im Rahmen der Verstellung aus der Zwischenposition in die Geschlossenposition in einer ersten Teilbewegung eine Verkippung des Verschlusselements quer zur Verstellachse eingeleitet und/oder bewirkt wird.

Insbesondere wird hierdurch eine Querbewegung eines Teils des Verschlusselements quer zur Verstellachse, insbesondere mit einer vorwiegend orthogonalen Richtungskomponente, eingeleitet und bewirkt.

Durch das Zusammenspiel aus Führungselement und Führung, z.B. eine kulissenartige Führung mit einer in oder auf der Kulisse laufenden Rolle, kann ein Andrücken des Ventilverschlusses (z.B. Teller- oder Torverschluss) so geführt werden und erfolgen, dass dabei, d.h. bei einem In-Kontakt-Bringen der Verschlussseite mit dem Ventilsitz eine dominierende Bewegung des Verschlusses orthogonal zur Ventilsitzfläche erfolgt und dabei keine oder nur noch sehr geringe Querbelastung auf das Dichtmaterial zwischen Ventilsitz und Verschluss auftritt. Die Führung bzw. die Kulisse kann hierfür z.B. mit einer kurvenartigen (gekrümmten) Oberfläche ausgestaltet sein, welche eine entsprechende Umlenkung der Richtung der Schliessbewegung des Verschlusses in der letzten Phase des Schliessprozesses bewirkt.

Insbesondere kann die Verkippung des Verschlusselements derart ausgeprägt sein, dass ein Teil der Verschlussseite auf den Ventilsitz gedrückt wird und mit dem Ventilsitz zumindest entlang einer Aufsetzlinie in Kontakt steht, wobei die Aufsetzlinie im Wesentlichen orthogonal zur Öffnungsachse sowie orthogonal zur Verstellachse ist. Das Verschlusselement wird dann mit einer Seite auf den Ventilsitz gedrückt, wobei ein zwischenliegendes Dichtmaterial für einen gasdichten Übergang in diesem Bereich sorgt.

In einer Ausführungsform kann im Rahmen der Verstellung aus der Zwischenposition in die Geschlossenposition in einer zweiten Teilbewegung das Verschlusselement mit dessen Verschlussseite derart auf den Ventilsitz gedrückt werden, dass ein Kontakt zwischen Ventilsitz und Verschlussseite umlaufend besteht und die Öffnung verschlossen ist. Bei Erreichen der Geschlossenposition kann dann eine Dichtfläche des Verschlusselements auf einer gegenüberliegenden Dichtfläche des Ventilsitzes vollständig aufliegen. Das zwischenliegende Dichtmaterial kann dabei entlang seiner gesamten Erstreckung verpresst vorliegen und damit eine gewünschte Dichtwirkung bereitstellen.

Die zweite Teilbewegung weist insbesondere eine Rotationsbewegung des Ventilverschlusses um die Aufsetzlinie (als Rotationsache) auf, insbesondere wobei die Teilbewegung einer Rotation des Ventilverschlusses um die Aufsetzlinie entspricht.

Gemäss einer Ausführungsform der Erfindung stellt die Führung einen Anschlag für das Führungselement bereit, wobei die erste Teilbewegung durch das Anschlagen des Führungselements an dem Anschlag begrenzt ist und mit dem Anschlagen die zweite Teilbewegung eingeleitet wird.

Ein solcher Anschlag kann z.B. durch ein geschlossenes Ende der Führung oder ein bewegungsbegrenzendes Anschlagelement im Verlauf der Führung bereitgestellt sein.

Eine Schubstange oder Koppelstange der Antriebseinheit kann beispielsweise nach dem Anschlagen jedoch weiterhin in Schliessrichtung verstellt werden, wodurch z.B. zwei Schenkel (Schwenkelemente) in Richtung zum Ventilsitz ausschwenken, so dass das Verschlussteil auf den Ventilsitz gedrückt und die Öffnung somit verschlossen wird.

In einer Ausführung kann die Führung derart ausgeformt sein, dass bei einer Verschiebung aus der Offenposition in die Zwischenposition, und zurück, eine geradlinige Bewegung des gesamten Verschlusselements entlang der Verstellachse erfolgt und im Rahmen der ersten Teilbewegung eine von der Ausrichtung der Verstellachse abweichende Querbewegung zumindest eines Teils des Verschlusselements erfolgt und ein Kippen des Verschlusselements resultiert. Die lineare Bewegung entlang der Verstellachse wird dabei insbesondere von einer Querbewegung überlagert.

Die Führung weist eine einen Führungspfad definierende Vertiefung, längliche Ausnehmung, Rinne oder Nut auf oder ist als solche ausgebildet. Durch eine solche Ausführung, in der das Führungselement z.B. in Form einer Rolle bewegt wird, wird eine Art Kulisse für die Bewegung des Verschlusselements bereitgestellt. Das Verschlusselement kann hierdurch sehr präzise und vorbestimmt allein mittels einer linearen Antriebseinheit bewegt werden.

Die Führung lässt eine Beweglichkeit des Verschlusselements mit nur einem Bewegungsfreiheitsgrad zu, wobei der Bewegungsfreiheitsgrad durch den Führungspfad definiert ist. Das Verschlusselement kann nur in zwei entgegengesetzte Richtungen (Schliessen und Öffnen) verschoben werden.

Insbesondere weist der Führungspfad einen zumindest teilweise gekrümmten, insbesondere kurvenförmigen, Verlauf in einem die Verstellung aus der Zwischenposition in die Geschlossenposition definierenden Bereich auf. Der gekrümmte Verlauf ist insbesondere derart ausgeführt, dass die Krümmung in Richtung hin zu dem Ventilsitz weist (bezüglich des Schliessvorgangs).

Insbesondere ist die Führung mit einem flachen und quer zur Verstellachse sich erstreckenden, insbesondere keilförmigen Oberflächenverlauf der Führungsfläche oder mit einem gekrümmten, insbesondere kurvenförmigen, Oberflächenverlauf der Führungsfläche ausgebildet. Die Oberfläche ist insbesondere derart ausgeführt, dass der Verlauf mit homogener Krümmung oder zumindest mit gleichbleibender Krümmungsrichtung gegeben ist. Durch eine solche Form der Oberfläche kann eine fliessende Schliessbewegung des Tors realisiert werden.

Erfindungsgemäss wird insbesondere die Querbewegung des Verschlusselements der im Wesentlichen zum Ventilsitz parallelen Verschiebebewegung bei der Verschiebung aus der Offenposition in die Geschlossenposition überlagert.

In Abhängigkeit der Ausführungen von Führung und Führungselement kann das in einer bestimmten Ausführungsform derart ausgebildet sein, dass es in die Führung eingreift und eine Führung des Verschlusselements dadurch bereitgestellt wird.

In einer Ausführungsform kann das Führungselement ein Gleitelement oder eine Rolle aufweisen oder als solche ausgebildet sein. Das Führungselement ist vorzugsweise als Rolle oder (abgerundetes) Gleitelement zur Umlenkung der Bewegungsrichtung ausgebildet. Die Oberfläche eines solchen Umlenkmittels kann z.B. in besonderer Weise gehärtet ausgeführt sein um einen möglichen Verschleiss zu reduzieren. Alternativ kann die Lauffläche beispielsweise gummiert sein, d.h. mit einem elastischen gummiartigen Material, z.B. Polymer, versehen sein zum Zweck einer nach Möglichkeit stossarmen und ruhigen Führung des Verschlusselements beim Schliessvorgang.

Gemäss einer bestimmten Ausführungsform kann das Führungselement starr mit dem Verschlusselement verbunden sein. In einer alternativen Ausführungsform ist das Führungselement positionsmässig variierbar, insbesondere schwenkbar, relativ zum Verschlusselement angeordnet.

Die Kopplungseinheit kann zudem ein weiteres Führungselement aufweisen, das zumindest im Rahmen der Verstellung aus der Zwischenposition in die Geschlossenposition mit der Führung zusammenwirkt. Insbesondere steht das weitere Führungselement während des gesamten Bewegungsablaufs von Offenposition in die Geschlossenposition (und zurück) in Zusammenwirkung mit der Führung.

Gemäss einer Ausführungsform der Erfindung weist die Kopplungseinheit ein starr an der Rückseite des Verschlusselements angeordnetes Halteelement, ein schwenkbar an der Rückseite des Verschlusselements gelagertes Schwenkelement und ein Rückstellelement auf, das mit dem Halteelement und dem Schwenkelement verbunden ist.

Das Rückstellelement ist insbesondere als Feder, insbesondere Spiralfeder, oder als elastisches Element ausgebildet und liegt in der Offenposition und der Zwischenposition vorgespannt vor.

Durch die Vorspannung kann das Schwenkelement in einer eingeklappten Normalposition gehalten werden. Durch die anliegende Rückstellkraft und die Stellung des Schwenkelements in der eingeklappten Normalposition kann das Verschlusselement in der Offenposition und in der Zwischenposition in einer definierten, im Wesentlichen parallel beabstandeten Gegenüberlage zum Ventilsitz vorliegen bzw. gehalten werden.

Eine durch das Rückstellelement bereitgestellte Rückstellkraft kann dann im Rahmen der zweiten Teilbewegung in die Geschlossenposition (also z.B. nach Erreichen des Anschlags) zunehmen, wobei die Rückstellkraft der Richtung der zweiten Teilbewegung in die Geschlossenposition entgegenwirkt. Insbesondere wird dabei eine Feder weiter gespannt.

Die Zunahme der Rückstellkraft kann in einem Ausschwenken des Schwenkelements, welches z.B. als Schenkel ausgebildet ist, begründet liegen. Ein Abstand zwischen dem Halteelement und einem Befestigungspunkt für das Rückstellelement an dem Schwenkelement nimmt dabei vorzugsweise zu.

Insbesondere erfolgt während der zweiten Teilbewegung ein Ausschwenken des Schwenkelements, wodurch das Verschlusselement mit dessen Verschlussseite derart auf den Ventilsitz gedrückt wird, dass der Kontakt zwischen Ventilsitz und Verschlussseite umlaufend erzeugt wird und die Öffnung verschlossen wird.

Das Rückstellelement (insbesondere eine oder mehrere Federn) kann somit einen Teil des Verschlusselements während eines Schliess- oder Öffnungsprozesses des Ventils über den grössten Teil der Bewegungsstrecke (bis zur Bewegung aus der Zwischenposition in die Geschlossenposition oder umgekehrt) mit einem definierten Abstand zur Ventilwand bzw. zu deren Ventilsitz halten. Dadurch wird verlässlich sichergestellt, dass kein ungewünschter Kontakt zwischen Verschlusselement und Ventilwand während der Bewegung auftritt. Ungewünschte Partikelbildung durch Materialabrieb kann dadurch zuverlässig verhindert werden.

Ein weiterer Vorteil der vorliegenden Erfindung resultiert aus dem Zusammenwirken der beiden oben genannten Ansätze, d.h. eine Energieaufnahme des Rückstellelements durch eine Bewegung des Verschlusselements quer zur Verstellachse (mit zumindest einer Bewegungskomponente orthogonal zu der Achse). Hierdurch kann erreicht werden, dass die Bewegung der Verschlussanordnung vor Erreichen der Verschliessposition abgebremst wird, da ein Teil der kinetischen Bewegungsenergie in Spannenergie des Rückstellelements umgewandelt wird.

Aufgrund der so verlangsamten Bewegung kann das tatsächliche Verschliessen der Öffnung in der letzten Bewegungsphase damit präziser und entsprechend in optimierter Weise gesteuert erfolgen.

Das Dämpfen der Schliessbewegung kann also mittels zweier Komponenten - Linearantriebseinheit und Rückstellelement - in zwei Phasen nacheinander oder zeitlich und wirkungsmässig überlappend erfolgen. Die Antriebseinheit übernimmt dabei z.B. zunächst eine Art Vordämpfung (Grobabdämpfung) und verlangsamt damit bereits die Schliessbewegung deutlich, wobei eine weitere Dämpfungswirkung (Feinabdämpfung) durch die Energieaufnahme des Rückstellelements erfolgt.

Bezüglich des Rückstellelements stellt eine Ausführungsform der Erfindung entsprechend eine derartige Anordnung des Rückstellelements bereit, dass die Querbewegung des Verschlusselements bei der Verschiebung aus der Zwischenposition in die Geschlossenposition eine Zunahme der Rückstellkraft bewirkt und die Zunahme der Rückstellkraft eine Dämpfung der Bewegung des Verschlusselements bei der Bewegung aus der Zwischenposition in die Geschlossenposition bewirkt.

In einer spezielleren Ausführung weist die Führung zumindest zwei Führungsschienen auf, welche parallel beabstandet an der Ventilwand angeordnet.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figs. 1a-c: eine Ausführungsform eines erfindungsgemässen Vakuumventils zum Verschliessen einer Öffnung bzw. zum Abschliessen eines Volumens im Querschnitt in unterschiedlichen Stellungen;
- Figs. 2a-c: eine weitere Ausführungsform eines erfindungsgemässen Vakuumventils in unterschiedlichen Zuständen; und
- Fig. 3: eine weitere Ausführungsform eines erfindungsgemässen Vakuumventils in perspektivischer Ansicht.

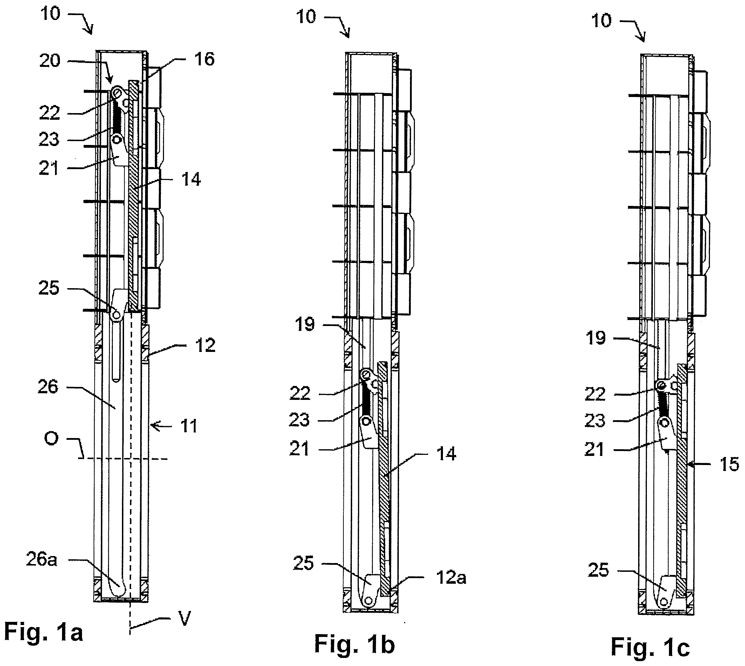

Figur 1a zeigt ein erfindungsgemässes Ventil 10, das zum Abschliessen einer Öffnung 11 ausgebildet ist, im Querschnitt. Das Ventil 10 weist eine Ventilwand 12 mit einem Ventilsitz auf. Der Ventilsitz umläuft die Öffnung 11 und korrespondiert mit seiner Form und Grösse mit einer Auflagefläche eines Verschlusselements 14. Das Verschlusselement 14 ist im gezeigten Beispiel als vergleichsweise gross dimensioniertes Tor bzw. Türe ausgebildet, kann jedoch alternativ z.B. als runder Ventilteller oder in einer alternativen, dem Fachmann bekannten Form - z.B. länglich oder rechtecksförmig - ausgebildet sein. Das Verschlusselement 14 wird auch als Ventilteller bezeichnet.

In der gezeigten Ausführungsform ist eine Dichtung 16 auf der Verschlussseite 15 des Verschlusselements 14 aufgebracht, insbesondere auf der Auflagefläche. Diese Dichtung 16 kann beispielsweise als Polymer mittels Vulkanisation auf das Verschlusselement 14 aufvulkanisiert sein. Alternativ kann die Dichtung 16 z.B. als O-Ring in einer Nut des Verschlusselements 14 ausgeführt sein. Auch kann ein Dichtmaterial auf das Verschlusselement 14 aufgeklebt sein und dadurch die Dichtung 16 verkörpern. In einer alternativen Ausführungsform kann die Dichtung 16 seitens der Ventilwand 12, insbesondere auf dem Ventilsitz, angeordnet sein. Auch Kombinationen dieser Ausführungen sind denkbar.

Das Verschlusselement 14 weist eine Kopplungseinheit 20 auf, die über eine Koppelstange 19 mit einer Antriebseinheit, z.B. Motor, Pneumatik oder Hydraulik, verbunden ist und mittels welcher das Verschlusselement 14 linear entlang einer Verstellachse V gesteuert bewegbar ist. Die Verstellachse V ist zumindest im Wesentlichen orthogonal zu einer durch die Öffnung 11 definierten Öffnungsachse O ausgerichtet.

Die Kopplungseinheit 20 verfügt über ein Halteelement 21, welches in fixer und starrer Positionsrelation mit dem Verschlusselement 14 verbunden ist, und über ein Schwenkelement 22, welches schwenkbar relativ zum Verschlusselement 14 gelagert ist. Halteelement 21 und Schwenkelement 22 sind mittels eines Rückstellelements 23, hier eine Spiralfeder, miteinander gekoppelt. In der gezeigten Ausführungsform ist die Koppelstange 19 mit dem Schwenkelement 22 verbunden.

Das Rückstellelement 23 liegt in der gezeigten Offenposition in einem vorgespanten Zustand vor und bewirkt hierdurch eine Querstellung des Schwenkelements 22 relativ zum Ventilteller 14. Aus dieser Querstellung resultiert ein derartiges Halten des Ventiltellers 14, dass der Ventilteller 14 in einem definierten Abstand zu der Ventilwand 12 vorliegt. Durch die Vorspannung kann der Abstand zwischen Ventilwand 12 und Verschlusselement 14 verlässlich während der Öffnung des Ventils und während der Schliessbewegung bis unmittelbar vor dem tatsächlich stattfindenden Schliessen des Ventils bereitgestellt werden. Dadurch wird in vorteilhafter Weise eine eventuelle Partikelbildung bei einer Berührung dieser Teile und einer gleichzeitigen Relativbewegung parallel zur Verstellachse V (Querbeanspruchung der Dichtung) zuverlässig verhindert.

Das Verschlusselement 14 weist ferner ein Führungselement 25, z.B. eine Rolle, ein Rad oder einen Gleiter, auf. Dem Fachmann sind weitere alternative Ausgestaltungsmöglichkeiten hierfür mit gleicher Wirkung bekannt, welche ebenso als Führungselement 25im Sinne der Erfindung angesehen werden. Das Führungselement 25 liegt in einer Führung 26 des Ventils 10 vor. Das Zusammenwirken von Führung 26 und Führungselement 25 stellt eine Verstellbarkeit des Verschlusselements 14 grösstenteils linear entlang der Verstellachse V bereit. Die Führung 26 ist als längliche Vertiefung (Nut) ausgeführt und definiert hierdurch einen Führungspfad, entlang welchem das Führungselement 25 in zwei Richtungen bewegbar ist.

Die Führung 26 ist mit dem Ventil 10, hier starr mit der Ventilwand 12, verbunden. Wie hier gezeigt, kann die Führung 26 eine Führungsfläche mit einem im Querschnitt gekrümmten Oberflächenverlauf bereitstellen. Gemäss alternativer Ausführungen kann der Oberflächenverlauf ungekrümmt (flach) und quer zur Verstellachse K ausgebildet sein. Auch Mischformen aus einer gekrümmten und einer flachen Führungsoberfläche sind möglich.

Die Führung 26 weist im Bereich ihres geschlossenen und die Bewegung des Führungselements 25 limitierenden Endes eine Krümmung 26a auf. Die Krümmung 26a weist in Richtung des Ventilsitzes. In anderen Worten: die Krümmung 26a definiert den Verlauf des Führungspfades derart, dass die Abstände von in Richtung hin zu dem Ende der Führung 26 nebeneinander liegen Punkten auf dem Führungspfad zur Ventilwand (bezüglich einer jeweiligen Normalen der Ventilwand) geringer werden. Dadurch wird die über den grössten Teil des Verstellwegs ausschliesslich vorliegende Linearbewegung des Verschlusstellers 14 bei der Bewegung in den Geschlossenzustand des Ventils 10 (Figur 1c) teilweise mit einer Querbewegung überlagert, so dass das Verschlusselement 14 im letzten Bewegungsabschnitt der Schliessbewegung nicht mehr ausschliesslich linear parallel zur Verstellachse V, sondern (auch) quer zu dieser Achse bewegt wird, insbesondere mit fortlaufender Veränderung der Bewegungsrichtung. Hierdurch folgt ein Kippen des Verschlusselements 14.

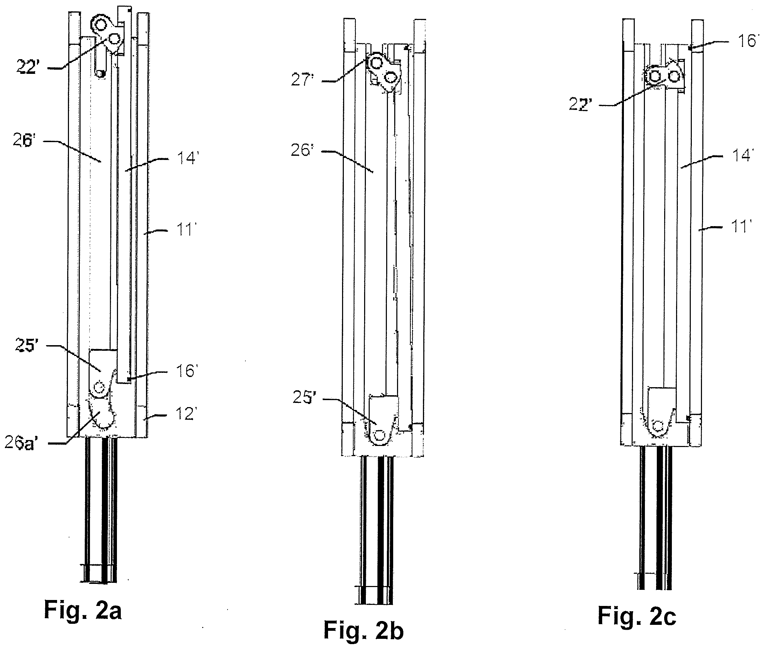

Mittels des Antriebs kann das Verschlusselement 14 samt Führungselement 25 und Kopplungseinheit 20 zunächst in eine Zwischenposition bewegt werden (vgl. Zustand des Verschlusselements in der Ausführung gemäss Fig. 2a). Der Zustand des Kopplungselements 20 entspricht hierbei im Wesentlichen dem Zustand in der Offenposition.

Das Kopplungselement 20 weist zumindest ein weiteres Führungselement (z.B. eine oder zwei weitere Rolle(n)) auf, das an dem Halteelement 21 und/oder an dem

Schwenkelement 22 angeordnet ist. In Abhängigkeit der Ausformung der Führung 26 steht dieses weitere Führungselement stets mit der Führung 26 in Zusammenwirkung oder wird im Rahmen der Bewegung aus der Offenposition in die Geschlossenposition, insbesondere in die Zwischenposition, in Zusammenwirkung mit der Führung 26 gebracht. Im gezeigten Beispiel ist das weitere Führungselement mit dem Schwenkelement 22 gekoppelt.

Bei der weiteren Bewegung entlang des Führungspfades, d.h. einer Verstellung aus der Zwischenposition in die Geschlossenposition, wird das Verschlusselement 14 in zwei Stufen verstellt und nimmt entsprechend zwei unterschiedliche Zustände ein.

In der ersten Stufe, d.h. einer ersten Teilbewegung, wird das Führungselement 25 entlang der Krümmung 26a bewegt, wodurch eine Kippbewegung des Verschlusselements 14 relativ zur Verstellachse V erfolgt und ein Teil der Verschlussseite 15 auf den Ventilsitz gedrückt wird und mit dem Ventilsitz zumindest entlang einer Aufsetzlinie 12a in Kontakt steht. Hierbei wird insbesondere die Dichtung 16 in diesem Bereich auf den gegenüberliegenden Ventilsitz gepresst. Dieser Zustand ist in Figur 1b gezeigt. Die Öffnung 11 ist dabei noch nicht verschlossen. Der Zustand des Kopplungselements 20 entspricht hierbei weiterhin im Wesentlichen dem Zustand in der Offenposition. Das Kopplungselements 20 wird mittels der Führung 26 geführt. Die Krümmung 26a der Oberfläche der Führung 26 bietet den Vorteil, dass hierdurch die Bewegung des Verschlusses 14 so geführt werden kann, dass zum Zeitpunkt des Kontaktierens von Dichtung 16 und Ventilsitz die Bewegung bereit zumindest teilweise oder grösstenteils, insbesondere vollständig, in eine orthogonale Querbewegung übergegangen ist und dadurch keinerlei oder nur eine sehr geringe Querbeanspruchung des Dichtmaterials beim Kontaktieren auftritt. Dadurch kann ein potentieller Partikelabrieb weitgehend bzw. vollständig verhindert werden.

Im Rahmen der zweiten Stufe, d.h. einer zweiten Teilbewegung, erfolgt keine weitere Bewegung des Verschlusselements 14 in Richtung der Verstallachse V, sondern ein Teil des Verschlusselements 14 wird lediglich quer, insbesondere orthogonal, zur Verstellachse V bewegt. Insbesondere erfolgt eine Rotation des Verschlusselements 14 um die Aufsetzlinie 12a. Diese Rotation resultiert in einem Verschliessen der Öffnung 11 durch eine vollständige Anpressung der Verschlussseite 15 entlang dem Ventilsitz (Geschlossenposition; Figur 1c). Im Rahmen der zweiten Teilbewegung wird das Schwenkelement 22 durch ein Weiterbewegen der Koppelstange 19 relativ zum Verschlusselement geschwenkt. Das Schwenkelement 22 nimmt dabei eine zunehmend orthogonale Ausrichtung relativ zum Verschlusselement 14 ein. In anderen Worten: das Schwenkelement 22 wird relativ zum Verschlusselement 14 aufgestellt.

Die Bewegungsfreiheitgrade des Schwenkelements 22 sind aufgrund der Kopplung mit dem weiteren Führungselement auf eine Bewegung in Richtung der Führung 26 limitiert. Eine Querbewegung wird hierdurch ausgeschlossen. Dies hat den Effekt, dass das Schwenkelement 22 in diesem Teilschritt wie gewünscht geschwenkt wird und das Verschlusselement 14 durch das Schwenken auf den Ventilsitz gedrückt wird.

Während diesem Vorgang wird das Rückstellelement 23 komprimiert und dessen bereitgestellte Rückstellkraft nimmt zu. Diese Rückstellkraft sorgt bei einer Gegenbewegung aus der Geschlossenposition in die Zwischenposition für ein Zurückschwenken des Schwenkelements und damit für ein Ablösen des Verschlusselements 14 von dem Ventilsitz.

Durch die erfindungsgemässe Anordnung und das Zusammenspiel von Führung/Führungselement und Führung/Schwenkelement wird eine beschriebene Ausführung eines Verschliesssystems mit vergleichsweise wenigen Bauteilen ermöglicht. Das Ventil, insbesondere die Öffnung und der Verschluss, kann in unterschiedlichen Grössen mit entsprechend gleichen Bauteilen und korrespondierender Anordnung realisiert werden. Vorteilhaft ist zudem, dass die Änderung des Öffnungszustands sehr kontrolliert und gesteuert vorgenommen werden kann.

Ein weiterer grosser Vorteil der Erfindung liegt ausserdem darin, dass bei dem bereitgestellten Verschliessvorgang und dem Öffnungsvorgang keine Querbeanspruchung des Dichtmaterials auftritt und die Entstehung von Verunreinigungen (z.B. Partikelbildung durch Abrieb) dadurch vermieden werden kann.

Gleichzeitig ist durch die erfindungsgemässe Anordnung ein vergleichsweise schnelles Verschliessen und Öffnen der Öffnung möglich, wobei die Komplexität der Anordnung vergleichsweise gering, die Robustheit jedoch gross ist.

Durch die vorliegende Krümmung des Führungspfades kann zudem ein (dadurch automatisch gegebenes) Abbremsen der Schliessbewegung erfolgen, wodurch ein unerwünscht starker Stoss des Verschlusselements auf den Ventilsitz vermieden werden kann.

Die Figuren 2a-c zeigen eine weitere Ausführungsform für einen Ventilverschluss gemäss der Erfindung.

Die Figur 2a zeigt das Verschlusselement 14' in einer Zwischenposition, in welcher sich das Verschlusselement 14' zumindest teilweise in einer im Wesentlichen parallel beabstandeten Gegenüberlage zum Ventilsitz befindet. Das Verschlusselement 14' liegt hierbei nicht allen Teilen des Ventilsitzes gegenüber.

Das Schwenkelement 22' (z.B. ausgeführt als Lasche und/oder als Kniehebelmechanismus) weist in der Zwischenposition eine gekippte Stellung relativ zum Verschluss 14' auf.

Die Figur 2b zeigt den Ventilverschluss in einem Zustand zwischen der Zwischenposition und der Geschlossenposition, insbesondere nach einer ersten Teilbewegung wie mit der Ausführungsform gemäss den Figuren 1a-c beschrieben. Das weitere Führungselement 27', das mit dem Schwenkelement verbunden ist, wird hierbei ebenfalls mittels der Führung 26' geführt. Das Führungselement 25' des Verschlusselements 14' ist an einem durch das Ende der

Nut 26' gebildeten Anschlag angeschlagen. Die Dichtung 16' wird im Bereich der Krümmung 26a' auf den Ventilsitz gedrückt. Das Verschlusselement 14' liegt quer relativ zur Ventilwand vor.

Beim Übergang von diesem Zwischenzustand in die Geschlossenposition (Figur 2c) wird das Schwenkelement 22 verschwenkt und dadurch ein Kippen des Verschlusselements 14' bewirkt. Das Kippen entspricht hierbei einem Schwenken des Verschlusses um eine Achse, die durch den Kontaktbereich zwischen Dichtung 16' und Ventilsitz 12' definiert ist. Durch das Kippen wird die Dichtung 16' umlaufend auf den Ventilsitz 12' gedrückt und die Öffnung 11' gasdicht verschlossen. Das Schwenkelement 22 bewirkt hierbei eine Verriegelung des Verschlusselements.

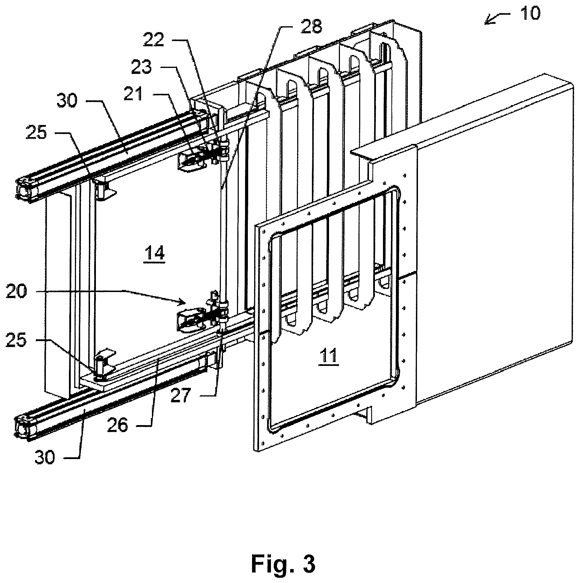

Figur 3 zeigt eine Ausführungsform eines als Torventil ausgebildeten erfindungsgemässen Ventils 10 in einer perspektivischen Darstellung, wobei ein Gehäuse des Ventils 10 geöffnet dargestellt ist. Die mit vorher gezeigten Ventilen funktional gleichwirkenden Teile sind mit gleichen Bezugszeichen gekennzeichnet.

Das Ventil 10 definiert eine Öffnung 11, die mit einem Ventilteller 14 bzw. einer Ventiltüre (Verschlusselement) verschliessbar ist. Das Tor 14 bzw. die Türe des Ventils, ist hier rechteckförmig mit abgerundeten Ecken ausgebildet. Die Ventiltüre 14 kann mittels eines Antriebs verstellt werden. Der Antrieb weist zwei Pneumatikelemente 30 auf, die beidseits der Öffnung angeordnet sind. Eine Querstange 28 ist mit beiden Pneumatikelementen 30 verbunden.

Der Antrieb kann in den Zylindern innenlaufenden Schubstangen aufweisen. Für eine Vorab-Dämpfung der Schliessbewegung können im Inneren der Zylinder entsprechende Dämpfungselemente und/oder eine spezifische elektronische Ansteuerung der im Zylinder vorgesehenen Antriebsmotoren vorgesehen sein. Eine solche Vorab-Dämpfung kann bereits vor Erreichen der Zwischenposition erfolgen und kann auch über das Erreichen der Zwischenposition hinaus bewirkt werden.

Die Querstange 28 ist zudem mit zwei Schwenkelementen 22 (Kniehebelelemente) jeweiliger Kopplungseinheiten gekoppelt. Die Kopplungseinheiten sind an der Rückseite (gegenüber der Verschlussseite) der Ventiltüre 14 angebracht. Den Schwenkelementen 22 ist jeweils eine Rolle 27 (weiteres Führungselement) zugeordnet, hier mittels der Querstange 28 verbunden und an dieser angeordnet. Die Rollen 27 laufen in jeweiligen Führungen 26 und sind darin linear verschiebbar.

Figur 3 zeigt das Ventil 10 in einem geschlossenen Zustand. Die türseitige Dichtung ist mit einem gehäuseseitigen Ventilsitz verpresst. Diese Verpressung entlang der gesamten Dichtung wird einerseits durch ein Zusammenwirken der Führungen 26 (insbesondere der Krümmungen im Führungsverlauf) mit den Führungselementen 25 und andererseits durch das Zusammenwirken der Führungen 26 mit den Kopplungseinheiten bereitgestellt. Das Tor wird durch die Krümmung der Führung 26 in der Endphase einer Schliessbewegung zumindest einseitig in Richtung Ventilsitz bewegt.

Bei der Öffnung des Ventils 10 wird zunächst das Schwenkelement 22 durch dessen Kopplung mit dem Halteelement 21 geschwenkt, wodurch ein einseitiges Ablösen der Tür 14 von dem Ventilsitz resultiert. Danach wird das Führungselement 25 in Verstellrichtung (hier: nach rechts) in die Offenposition bewegt, was in einer vollständigen Ablösung der Dichtung von dem Ventilsitz resultiert. Beide Bewegungsanteile werden durch den Antrieb bereitgestellt.

Das Verschlusstor 14 ist also mittels zweier Hebelmechanismen 20 mit der Querstange 28 (Kopplungseinheit) gekoppelt. Durch diese konstruktive Anordnung ist das Tor 14 bezüglich dessen Abstands zur Querstange 28 beweglich variierbar. An den Schwenkelementen 22 sind wiederum Federn23 befestigt, wobei die anderen Enden an den Halteelementen 21 angebracht sind. Hierdurch, d.h. durch die vorgespannte Befestigung der Federn 23, wird eine Rückstellkraft auf des Tor 14 bezüglich der Querstange 28 bewirkt, sodass das Tor 14 in einem nicht geschlossenen Zustand mit einem definierten Abstand zur Querstange 28 vorliegt und dessen Beweglichkeit eine ebenso definierte Vergrösserung des Abstands - bedingt durch die Ausgestaltung (insbesondere Länge und Verschwenkbarkeit) der Schwenkelemente 22 - zulässt. Dieser Verstellweg orthogonal zur Erstreckungsebene (Oberfläche der in einem Ventil zur Öffnung gerichteten Verschlussseite) des Tors 14 (im geöffneten Zustand) wird genutzt um eine berührungslose Führung des Verschlusses 14 bis hin zur tatsächlichen Geschlossenposition verlässlich bereitzustellen und um für das Schliessen ein Andrücken der Dichtung 16 bzw. der Dichtfläche des Tors 14 im Wesentliches in Normalenrichtung der Dichtfläche (d.h. in eine Richtung parallel zur Normalen auf die Dichtfläche) zu erreichen. Eine ungewünschte Partikelbildung z.B. durch eine Querbeanspruchung des Dichtmaterials kann dadurch verhindert oder zumindest deutlich reduziert werden.

Es versteht sich, dass die dargestellten Figuren nur mögliche Ausführungsbeispiele schematisch darstellen. Die verschiedenen Ansätze können erfindungsgemäss ebenso miteinander sowie mit Ventilen zum Verschliessen von Prozessvolumina unter Vakuumbedingungen des Stands der Technik kombiniert werden.

## Patentansprüche

1. Vakuumventil (10), insbesondere Vakuumschieberventil, insbesondere Torventil, zum im Wesentlichen gasdichten Verschliessen einer eine Öffnungsachse (O) definierende Öffnung (11), mit
• einem Verschlusselement (14,14') mit einer Verschlussseite (15) und einer Kopplungseinheit (20), die an einer der Verschlussseite (15) gegenüberliegenden Rückseite angeordnet ist,
• einer die Öffnung (11) umlaufenden Ventilwand (12,12') mit Ventilsitz,
• einer Linearantriebseinheit (30), mittels welcher das Verschlusselement (14,14') in zumindest zwei Verstellrichtungen im Wesentlichen orthogonal zu der Öffnungsachse (O) entlang einer Verstellachse (V) verstellbar ist und somit das Verschlusselement (14,14') zwischen
□ einer die Öffnung (11) freigebenden Offenposition,
□ einer über die Öffnung (11) geschobenen Zwischenposition, in welcher sich das Verschlusselement (14,14') zumindest teilweise in einer im Wesentlichen parallel beabstandeten Gegenüberlage zum Ventilsitz befindet, und
□ einer die Öffnung (11) verschliessenden Geschlossenposition, wobei das Verschlusselement (14,14') mit dessen Verschlussseite (15) auf den Ventilsitz gedrückt ist und die Öffnung (11) verschliesst, insbesondere gasdicht verschliesst, verstellbar ist, wobei
• das Vakuumventil (10) eine der Öffnung (11) zugeordneten Führung (26,26') für das Verschlusselement (14,14') aufweist,
• das Verschlusselement (14,14') ein mit der Führung (26,26') während einer Verstellung aus der Offenposition in die Geschlossenposition, und zurück, zusammenwirkendes Führungselement (25,25') aufweist,
• die Führung (26,26') eine einen Führungspfad definierende
□ Vertiefung,
□ längliche Ausnehmung,
□ Rinne oder
□ Nut aufweist oder als solche ausgebildet ist **dadurch gekennzeichnet, dass**
· die Führung (26, 26')und das Führungselement (25, 25') derart ausgeformt sind und zusammenwirken, dass im Rahmen der Verstellung aus der Zwischenposition in die Geschlossenposition in einer ersten Teilbewegung eine Verkippung des Verschlusselements (14, 14') quer zur Verstellachse (V) eingeleitet und/oder bewirkt wird, und
• die Führung (26,26') nur eine Beweglichkeit des Verschlusselements (14,14') zulässt, die durch den Führungspfad definiert ist.

2. Vakuumventil (10) nach Anspruch 1,
**dadurch gekennzeichnet, dass**
die Verkippung derart ausgeprägt ist, dass ein Teil der Verschlussseite (15) auf den Ventilsitz gedrückt wird und mit dem Ventilsitz zumindest entlang einer Aufsetzlinie (12a) in Kontakt steht, wobei die Aufsetzlinie (12a) im Wesentlichen orthogonal zur Öffnungsachse (O) sowie zur Verstellachse (V) ist.

3. Vakuumventil (10) nach Anspruch 1 oder 2,
**dadurch gekennzeichnet, dass**
im Rahmen der Verstellung aus der Zwischenposition in die Geschlossenposition in einer zweiten Teilbewegung das Verschlusselement (14,14') mit dessen Verschlussseite (15) derart auf den Ventilsitz gedrückt wird, dass ein Kontakt zwischen Ventilsitz und Verschlussseite (15) umlaufend besteht und die Öffnung (11) verschlossen ist.

4. Vakuumventil (10) nach Anspruch 3,
**dadurch gekennzeichnet, dass**
die zweite Teilbewegung eine Rotation des Verschlusselements (14,14') um die Aufsetzlinie (12a) aufweist, insbesondere eine Rotation des Verschlusselements (14,14') um die Aufsetzlinie (12a) ist.

5. Vakuumventil (10) nach einem der vorangehenden Ansprüche,
**dadurch gekennzeichnet, dass**
die Führung (26,26') einen Anschlag für das Führungselement (25,25') bereitstellt, wobei die erste Teilbewegung durch das Anschlagen des Führungselements (25,25') an dem Anschlag begrenzt ist und mit dem Anschlagen die zweite Teilbewegung eingeleitet wird.

6. Vakuumventil (10) nach einem der vorangehenden Ansprüche,
**dadurch gekennzeichnet, dass**
die Führung (26,26') derart ausgeformt ist, dass
• bei einer Verschiebung aus der Offenposition in die Zwischenposition, und zurück, eine geradlinige Bewegung des gesamten Verschlusselements (14,14') entlang der Verstellachse (V) erfolgt und
• im Rahmen der ersten Teilbewegung eine von der Ausrichtung der Verstellachse (V) abweichende Querbewegung zumindest eines Teils des Verschlusselements (14,14') erfolgt und ein Kippen des Verschlusselements (14,14') resultiert.

7. Vakuumventil (10) nach Anspruch 1,
**dadurch gekennzeichnet, dass**
der Führungspfad einen in einem die Verstellung aus der Zwischenposition in die Geschlossenposition definierenden Bereich zumindest teilweise gekrümmten, insbesondere kurvenförmigen, Verlauf (26a,26a') aufweist.

8. Vakuumventil (10) nach einem der vorangehenden Ansprüche,
**dadurch gekennzeichnet, dass**
• das Führungselement (25,25') in die Führung (26,26') eingreift,
und/oder
• das Führungselement (25,25') ein Gleitelement oder eine Rolle aufweist oder als solche ausgebildet ist. und/oder
• das Führungselement (25,25') starr mit dem Verschlusselement (14,14') verbunden ist.

9. Vakuumventil (10) nach einem der vorangehenden Ansprüche,
**dadurch gekennzeichnet, dass**
die Kopplungseinheit (20) ein weiteres Führungselement (27) aufweist, das zumindest im Rahmen der Verstellung aus der Zwischenposition in die Geschlossenposition mit der Führung (26,26') zusammenwirkt.

10. Vakuumventil (10) nach einem der vorangehenden Ansprüche,
**dadurch gekennzeichnet, dass**
die Kopplungseinheit (20) aufweist
• ein starr an der Rückseite des Verschlusselements (14,14') angeordnetes Halteelement (21),
• ein schwenkbar an der Rückseite des Verschlusselements (14,14') gelagertes Schwenkelement (22,22'), und
• ein Rückstellelement (23), das mit dem Halteelement (21) und dem Schwenkelement (22,22') verbunden ist,
insbesondere wobei das Rückstellelement (23) als Feder, insbesondere Spiralfeder, oder als elastisches Element ausgebildet ist und in der Offenposition und der Zwischenposition vorgespannt vorliegt.

11. Vakuumventil (10) nach Anspruch 10,
**dadurch gekennzeichnet, dass**
eine durch das Rückstellelement (23) bereitgestellte Rückstellkraft im Rahmen der zweiten Teilbewegung in die Geschlossenposition zunimmt, wobei die Rückstellkraft der Richtung der zweiten Teilbewegung in die Geschlossenposition entgegenwirkt.

12. Vakuumventil (10) nach Anspruch 10 oder 11,
**dadurch gekennzeichnet, dass**
während der zweiten Teilbewegung ein Schwenken des Schwenkelements (22,22') erfolgt, wodurch das Verschlusselement (14,14') mit dessen Verschlussseite (15) derart auf den Ventilsitz gedrückt wird, dass der Kontakt zwischen Ventilsitz und Verschlussseite (15) umlaufend erzeugt wird und die Öffnung (11) verschlossen wird.

## Claims

1. Vacuum valve (10), in particular a vacuum slide valve, in particular a gate valve, for substantially gas-tight closure of an opening (11) defining an opening axis (O), comprising
• a closure element (14, 14') having a closure side (15) and a coupling unit (20) which is arranged on a rear side opposite the closure side (15),
• a valve wall (12, 12') with valve seat surrounding the opening (11),
• a linear drive unit (30), by means of which the closure element (14, 14') can be adjusted in at least two adjustment directions essentially orthogonally to the opening axis (O) along an adjustment axis (V) and thus the closure element (14, 14') can be adjusted between
o an open position releasing the opening (11),
o an intermediate position slid over the opening (11), in which the closure element (14, 14') is at least partially in a substantially parallel spaced-apart opposite position to the valve seat, and
o a closed position closing the opening (11), wherein the closure element (14, 14') is pressed with its closing side (15) onto the valve seat and closes the opening (11), in particular closes it in a gas-tight manner,
wherein
• the vacuum valve (10) has a guide (26, 26') for the closure element (14, 14') associated with the opening (11),
• the closure element (14, 14') comprises a guide element (25, 25') cooperating with the guide (26, 26') during a displacement from the open position to the closed position and back,
• the guide (26,26') has a
o depression,
o elongated recess,
o trough or
o groove
defining a guide path, or is designed as such,
**characterized in that**
• the guide (26, 26') and the guide element (25, 25') are shaped and cooperate in such a way that, in the course of the adjustment from the intermediate position into the closed position, a tilting of the closure element (14, 14') transversely to the adjustment axis (V) is initiated and/or effected in a first partial movement, and
• the guide (26, 26') only permits a mobility of the closure element (14, 14') which is defined by the guide path.

2. Vacuum valve (10) according to claim 1, **characterized in that** the tilting is pronounced such that a portion of the closure side (15) is pressed onto the valve seat and is in contact with the valve seat at least along a touchdown line (12a), wherein the touchdown line (12a) is substantially orthogonal to the opening axis (O) as well as to the adjustment axis (V).

3. Vacuum valve (10) according to claim 1 or 2, **characterized in that,** in the course of the adjustment from the intermediate position into the closed position, the closure element (14, 14') is pressed with its closure side (15) onto the valve seat in a second partial movement in such a way that there is circumferential contact between the valve seat and the closure side (15) and the opening (11) is closed.

4. Vacuum valve (10) according to claim 3, **characterized in that** the second partial movement comprises a rotation of the closure element (14, 14') about the touchdown line (12a), in particular is a rotation of the closure element (14, 14') about the touchdown line (12a).

5. Vacuum valve (10) according to one of the preceding claims, **characterized in that** the guide (26, 26') provides a stop for the guide element (25, 25'), wherein the first partial movement is limited by the guide element (25, 25') striking the stop and the second partial movement is initiated with the stop.

6. Vacuum valve (10) according to one of the preceding claims, **characterized in that** the guide (26,26') is shaped such that
• during a displacement from the open position to the intermediate position and back, a rectilinear movement of the entire closure element (14, 14') takes place along the adjustment axis (V), and
• in the course of the first partial movement, a transverse movement of at least part of the closure element (14, 14') deviating from the alignment of the adjustment axis (V) takes place and a tilting of the closure element (14, 14') results.

7. Vacuum valve (10) according to claim 1, **characterized in that** the guide path has an at least partially curved, in particular curvilinear, course (26a, 26a') in a region defining the adjustment from the intermediate position into the closed position.

8. Vacuum valve (10) according to one of the preceding claims, **characterized in that**
• the guide element (25, 25') engages in the guide (26, 26'), and/or
• the guide element (25, 25') has a sliding element or a roller or is designed as such,
and/or
• the guide element (25, 25') is rigidly connected to the closure element (14, 14').

9. Vacuum valve (10) according to one of the preceding claims, **characterized in that** the coupling unit (20) has a further guide element (27) which cooperates with the guide (26, 26') at least within the scope of the displacement from the intermediate position into the closed position.

10. Vacuum valve (10) according to one of the preceding claims, **characterized in that** the coupling unit (20) comprises
• a retaining element (21) rigidly arranged on the rear side of the closure element (14,14'),
• a pivoting element (22, 22') pivotably mounted on the rear side of the closure element (14, 14'), and
• a restoring element (23) connected to the retaining element (21) and the pivoting element (22, 22'),
in particular wherein the restoring element (23) is designed as a spring, in particular a spiral spring, or as an elastic element, and is pretensioned in the open position and the intermediate position.

11. Vacuum valve (10) according to claim 10, **characterized in that** a restoring force provided by the restoring element (23) increases within the second partial movement into the closed position, wherein the restoring force counteracts the direction of the second partial movement into the closed position.

12. Vacuum valve (10) according to claim 10 or 11, **characterized in that** during the second partial movement a pivoting of the pivoting element (22, 22') takes place, whereby the closure element (14, 14') is pressed with its closure side (15) onto the valve seat in such a way that the contact between the valve seat and the closure side (15) is produced circumferentially and the opening (11) is closed.

## Revendications

1. Vanne à vide (10), en particulier vanne à tiroir à vide, en particulier vanne de porte, pour fermer de manière sensiblement étanche aux gaz une ouverture (11) définissant un axe d'ouverture (O), comprenant
• un élément de fermeture (14, 14') avec un côté de fermeture (15) et une unité d'accouplement (20) qui est disposée sur un côté arrière opposé au côté de fermeture (15),
• une paroi de vanne (12, 12') entourant l'ouverture (11) et comportant un siège de vanne,
• une unité d'entraînement linéaire (30), au moyen de laquelle l'élément de fermeture (14, 14') peut être déplacé dans au moins deux directions de déplacement sensiblement orthogonales à l'axe d'ouverture (O) le long d'un axe de déplacement (V) et l'élément de fermeture (14, 14') peut ainsi être déplacé entre
o une position ouverte libérant l'ouverture (11),
o une position intermédiaire poussée sur l'ouverture (11), dans laquelle l'élément de fermeture (14, 14') se trouve au moins partiellement dans une position opposée au siège de vanne, espacée de celui-ci de manière sensiblement parallèle, et
o une position fermée fermant l'ouverture (11), l'élément de fermeture (14, 14') étant pressé avec son côté de fermeture (15) sur le siège de vanne et fermant l'ouverture (11), en particulier la fermant de manière étanche aux gaz,
dans laquelle
• la vanne à vide (10) présente un guide (26, 26') associé à l'ouverture (11) pour l'élément de fermeture (14, 14'),
• l'élément de fermeture (14, 14') présente un élément de guidage (25, 25') coopérant avec le guide (26, 26') pendant un déplacement de la position ouverte vers la position fermée et inversement,
• le guide (26, 26') présente
□ un approfondissement,
□ un évidement allongé,
□ une rigole ou
□ une rainure
définissant un chemin de guidage ou est conçu comme tel, **caractérisée en ce que**
• le guide (26, 26') et l'élément de guidage (25, 25') sont formés et coopèrent de telle sorte que, dans le cadre du déplacement de la position intermédiaire vers la position fermée, dans un premier mouvement partiel, un basculement de l'élément de fermeture (14, 14') transversalement à l'axe de déplacement (V) soit amorcé et/ou provoqué, et
• le guide (26, 26') n'autorise qu'une mobilité de l'élément de fermeture (14, 14') qui est définie par le chemin de guidage.

2. Vanne à vide (10) selon la revendication 1,
**caractérisée en ce que**
le basculement est tel qu'une partie du côté de fermeture (15) est pressée sur le siège de vanne et est en contact avec le siège de vanne au moins le long d'une ligne de pose (12a), la ligne de pose (12a) étant sensiblement orthogonale à l'axe d'ouverture (O) ainsi qu'à l'axe de déplacement (V).

3. Vanne à vide (10) selon la revendication 1 ou 2, **caractérisée en ce que**,
dans le cadre du déplacement de la position intermédiaire vers la position fermée, dans un deuxième mouvement partiel, l'élément de fermeture (14, 14') est pressé avec son côté de fermeture (15) sur le siège de vanne de telle sorte qu'il existe un contact périphérique entre le siège de vanne et le côté de fermeture (15) et que l'ouverture (11) soit fermée.

4. Vanne à vide (10) selon la revendication 3,
**caractérisée en ce que**
le deuxième mouvement partiel présente une rotation de l'élément de fermeture (14, 14') autour de la ligne de pose (12a), en particulier est une rotation de l'élément de fermeture (14, 14') autour de la ligne de pose (12a).

5. Vanne à vide (10) selon l'une des revendications précédentes, **caractérisée en ce que**
le guide (26, 26') fournit une butée pour l'élément de guidage (25, 25'), le premier mouvement partiel étant limité par la butée de l'élément de guidage (25, 25') contre la butée et le deuxième mouvement partiel étant amorcé par la butée.

6. Vanne à vide (10) selon l'une des revendications précédentes, **caractérisée en ce que**
le guide (26, 26') est formé de telle sorte que
• lors d'un déplacement de la position ouverte vers la position intermédiaire, et inversement, un mouvement rectiligne de l'ensemble de l'élément de fermeture (14, 14') est effectué le long de l'axe de déplacement (V) et que
• dans le cadre du premier mouvement partiel, il se produit un mouvement transversal d'au moins une partie de l'élément de fermeture (14, 14') s'écartant de l'orientation de l'axe de déplacement (V), ce dont il résulte un basculement de l'élément de fermeture (14, 14').

7. Vanne à vide (10) selon la revendication 1,
**caractérisée en ce que**
le chemin de guidage présente un tracé (26a, 26a') au moins partiellement incurvé, en particulier en forme de courbe, dans une zone définissant le déplacement de la position intermédiaire vers la position fermée.

8. Vanne à vide (10) selon l'une des revendications précédentes, **caractérisée en ce que**
• l'élément de guidage (25, 25') s'engage dans le guide (26, 26'),
et/ou
• l'élément de guidage (25, 25') présente un élément de glissement ou un galet ou est conçu comme tel,
et/ou
• l'élément de guidage (25, 25') est relié rigidement à l'élément de fermeture (14, 14').

9. Vanne à vide (10) selon l'une des revendications précédentes, **caractérisée en ce que**
l'unité d'accouplement (20) présente un autre élément de guidage (27) qui coopère avec le guide (26, 26') au moins dans le cadre du déplacement de la position intermédiaire vers la position fermée.

10. Vanne à vide (10) selon l'une des revendications précédentes, **caractérisée en ce que**
l'unité d'accouplement (20) présente
• un élément de retenue (21) disposé rigidement sur le côté arrière de l'élément de fermeture (14, 14'),
• un élément pivotant (22, 22') monté pivotant sur le côté arrière de l'élément de fermeture (14, 14'), et
• un élément de rappel (23) qui est relié à l'élément de retenue (21) et à l'élément pivotant (22, 22'),
l'élément de rappel (23) étant en particulier conçu comme un ressort, en particulier un ressort spiral, ou comme un élément élastique et étant précontraint dans la position ouverte et dans la position intermédiaire.

11. Vanne à vide (10) selon la revendication 10,
**caractérisée en ce**
**qu'**une force de rappel fournie par l'élément de rappel (23) augmente dans le cadre du deuxième mouvement partiel vers la position fermée, la force de rappel s'opposant à la direction du deuxième mouvement partiel vers la position fermée.

12. Vanne à vide (10) selon la revendication 10 ou 11,
**caractérisée en ce que**
pendant le deuxième mouvement partiel, il se produit un pivotement de l'élément pivotant (22, 22'), par lequel l'élément de fermeture (14, 14') est pressé avec son côté de fermeture (15) sur le siège de vanne de telle sorte que le contact entre le siège de vanne et le côté de fermeture (15) soit généré de manière périphérique et que l'ouverture (11) soit fermée.
